# EUROPEAN PATENT SPECIFICATION

(11) **EP 0 555 063 B1**
(45) Date of publication and mention of the grant of the patent: **14.04.1999**
(21) Application number: 93300774.2
(22) Date of filing: 03.02.1993
(51) Int. Cl.: H04B 10/16, H04J 14/08, H04B 10/18

(54) **Optical waveform shaping device**
Vorrichtung zur optischen Wellenformung
Dispositif de mise en forme d'ondes optiques

(30) Priority: 03.02.1992 JP 46391/92; 23.04.1992 JP 129354/92
(43) Date of publication of application: 11.08.1993
(73) Proprietor: KOKUSAI DENSHIN DENWA KABUSHIKI KAISHA, Shinjuku-ku Tokyo-to (JP)
(72) Inventor: Suzuki, Masatoshi, Kasashima-Machi, Saitama-Ken (JP); Edagawa, Noboru, Tokyo-To (JP); Tanaka, Hideaki, Koganei-Shi, Tokyo-To (JP); Yamamoto, Shu, Shiki-Shi (JP); Matsushima, Yuichi, Tokorozawa-Shi (JP)
(74) Representative: Crawford, Fiona Merle

(56) References cited:
- EP-A- 0 534 433
- GB-A- 2 219 903
- US-A- 4 980 891
- US-A- 4 991 975
- ELECTRONICS LETTERS. vol. 27, no. 14, 4 July 1991, STEVENAGE GB pages 1270 - 1272 NAKAZAWA ET AL '10Gbit/s soliton transmission over one million kilometres'

## Description

The present invention relates to an optical waveform shaping device which performs waveform equalization and timing synchronization for a high-speed digital fiber optic communication by the use of an optical pulse signal having a pulse duty factor within 1 with respect to a time slot.

With the recent progress of optical amplification techniques, the fiber optic communication technology permits realization of an ultra-long distance transmission across the Pacific Ocean, for instance, without using any conventional regenerative repeaters. With this linear optical amplifying-repeating transmission, however, as the transmission rate increases, the transmitted waveform undergoes gradual deterioration which is caused by the wavelength dispersion characteristic and nonlinear optical effect of the optical fiber used, imposing limitations on the ultra-high-speed long distance transmission. In recent years an optical soliton communication system has been in the limelight as a system which surmounts the limitations on the speeding up of transmission owing to the wavelength dispersion characteristic and nonlinear optical effect. The optical soliton system is one that makes positive use of the wavelength dispersion characteristic and nonlinear optical effect of the optical fiber which are contributing factors to the deterioration of the transmission characteristic of the above-mentioned prior art system and that transmits short optical pulses intact while balancing their broadening by the wavelength dispersion in the optical fiber and their compression by the nonlinear optical effect. A time multiplex and a wavelength multiplex system are also relatively easy to implement and are suitable for high-speed, large-capacity transmission.

In case of implementing the optical soliton communication system of large optical amplifying repeater spacing by selecting the amplifier gain large in a transpacific or similar ultra-long distance optical amplification system, a noise component of light spontaneously emitted from each optical amplifier increases and as the distance of transmission increases, such noise components are accumulated, causing a decrease in a signal to noise ratio of the whole system and hence deteriorating receiving characteristics. The main factor in deterioration of the receiving characteristics is a timing jitter resulting from a random velocity modulation of optical soliton pulses which is caused by the interaction of the accumulated noise components and the nonlinear optical effect of the optical fiber. If the pulse to be received, accompanied by the timing jitter, does not arrive within the time slot of a signal, an error will be induced. To avoid this, it is necessary that the gain of the amplifier be low to suppress the noise, and the spacing of the optically amplifying repeaters becomes relatively small.

On the other hand, there has been proposed a method which prevents an increase of such a timing jitter by retiming and waveform shaping of the transmitted signal by an optical modulator after allowing the passage of the signal through a certain number of optical amplifying repeaters (Publication 1; M. Nakazawa et al., "10 Gbit/s soliton data transmission over one million kilometers," Electronics Letters, Vol. 27, pp.1270-1272, July 1991). According to publication 1, a 510-km loop is prepared which is formed by optical amplifiers and optical fibers, an LiNbO₃ optical modulator inserted in the loop is driven by an electric signal synchronized with a transmitted code to provide a gate on the time domain, retiming and waveform shaping of the transmitted signal are performed by the gate and optical pulses are propagated through the loop, thereby simulating a long distance optical fiber transmission.

According to Publication 1, however, since the LiNbO₃ optical modulator is used which utilizes interference of light beams of specified wavelengths and specified directions of polarization, the gate waveform on the time domain is fixed and it is impossible to erase or remove accumulated noise having a spectral component of a wide time domain over which the gate is closed. Moreover, since the state of local polarization of the transmission system varies with time in the actual system, the modulation characteristic of the LiNbO₃ optical modulator also varies with time, and hence the LiNbO₃ optical modulator cannot be used.

It is therefore an object of the present invention to provide an optical waveform shaping device which permits the formation of an arbitrary time domain gate waveform and the elimination of accumulated noise and which allows the retiming and waveform shaping of the transmitted pulse signal regardless of the state of polarisation of incident light.

According to one aspect of the present invention there is provided an optical waveform shaping device, in which, in use, an input optical pulse signal is modulated in a modulator by a modulation signal to perform waveform shaping and re-timing, characterised in that;
an input path for receiving the input optical pulse signal is branched into two paths by an optical branch circuit, each of which paths is provided for receiving a respective one of two branched optical signals from the optical branch circuit;
a semiconductor electro-absorption type optical modulator is provided as said modulator in one of said two paths, to modulate one of said two branched optical signals by the modulation signal, a DC voltage being applied, in use, to said optical modulator from a DC voltage source, and that
the other path of said two paths is provided to obtain said modulation signal from the other of said two branched optical signals; said other path comprising:
a photodetector for receiving the other of said two branched optical signals and for converting that signal into an electric signal;
a band-pass filter for permitting passage therethrough of a substantially sinusoidal voltage synchronised with a bit rate of said input optical pulse signal, which is the fundamental frequency component of the electric signal converted by said photodetector;
an amplifier for amplifying the sinusoidal voltage having passed through said band-pass filter, and
a delay circuit for receiving and delaying the sinusoidal voltage amplified by said amplifier and the DC voltage from said DC voltage source, and for applying them to said semiconductor electro-absorption type optical modulator.

According to a further aspect of the present invention there is provided an optical waveform shaping device, in which, in use, a plurality of input optical pulse signals obtained from an input time-multiplexed optical pulse signal are respectively modulated in a plurality of modulators by respective modulation signals, to perform waveform shaping and re-timing synchronisation of respective ones of said plurality of input optical pulse signals, characterised in that:
a first optical branch circuit is provided for branching said input time-multiplexed optical pulse signal into said plurality of input optical pulse signals;
each of a plurality of input paths provided for receiving respective ones of said plurality of input optical pulse signals is branched by a respective one of a plurality of second optical branch circuits into a respective pair of a plurality pairs of paths, each of which is provided to receive two branched optical signals from the respective one of said plurality of second optical branch circuits;
each of a plurality of semiconductor electro-absorption type optical modulators is provided, as a respective one of said modulators, in a respective pair of paths to modulate one of said two branched optical signals by a respective one of said modulation signals, a DC voltage being applied, in use, to the respective semiconductor electro-absorption type optical modulator, from a respective one of a plurality of DC voltage sources;
that the other path of each pair is provided to obtain a respective modulation signal from the other of said two branched optical signals in said pair of paths; said other path comprising:
a plurality of photodetectors, each for receiving the other of said two branched optical signals and for converting said other branched optical signal into an electric signal;
a plurality of means, each for deriving from said respective one of said plurality of electric signals, a substantially sinusoidal voltage synchronised with a bit rate of an unmultiplexed input optical pulse signal, which is the fundamental frequency component of each of said input optical pulse signals;
a plurality of amplifiers, each for amplifying said sinusoidal voltage having passed through a respective one of said plurality of means and
a plurality of delay circuits each for receiving and delaying said sinusoidal voltage amplified by a respective one of said amplifiers and a respective DC voltage from the respective DC voltage source and for applying said amplified sinusoidal voltage to a respective one of said semiconductor electro-absorption type optical modulators.

The characteristics of the delay circuits, the DC voltage sources and the amplifiers are preselected so that at least one desired series of optical pulse signals is derived from the time-multiplexed optical pulse signals obtained through any of the semiconductor electro-absorption type optical modulators.

One embodiment of an optical waveform shaping device performs waveform shaping, re-timing and amplification for binary PCM fiber optic communication by the use of an optical pulse signal having a pulse duty factor within 1 with respect to a time slot. The optical pulse signal is branched by an optical branch circuit into two optical pulse signals. One of the two optical pulse signals is applied to a photodetector, a band-pass filter for extracting the substantially fundamental frequency component of the photodetector output, an amplifier and a delay circuit to obtain a substantially sinusoidal voltage synchronised with a bit rate of the optical pulse signal.

The other optical pulse signal is applied to a semiconductor electro-absorption type optical modulator which is driven by the sinusoidal voltage and a DC voltage from a DC voltage source. By changing the amplitude of the sinusoidal voltage and the DC voltage which are used to drive the semiconductor electro-absorption type optical modulator, the width of a gate waveform on the time domain of the semiconductor electro-absorption type optical modulator is changed to perform the waveform equalization and retiming synchronisation of the optical pulse signal.

Another embodiment of an optical waveform shaping device performs waveform shaping, re-timing and amplification for time-sharing separation of a multiplexed signal in a binary PCM fiber optic communication by the use of a signal obtained by time-division multiplexing an optical pulse signal into a plurality of pulse trains through so-called bit interleaving, and the optical pulse signal having a pulse duty factor within 1 with respect to a time slot. The optical pulse signal is branched into a plurality of optical pulse signals, each of which is further branched by an optical branch circuit into two optical pulse signals. One of the two branched optical signals is converted by a photodetector into an electric signal, after which the substantially fundamental frequency of the bit rate of the optical pulse signal prior to its multiplexing is extracted, and the thus extracted output is applied to an amplifier and a delay circuit to obtain a substantially sinusoidal voltage synchronized with a bit rate of the optical pulse signal prior to its multiplexing. The other branched optical pulse signal is provided to a semiconductor electro-absorption type optical modulator which is driven by the sinusoidal voltage and a DC voltage from a DC voltage source. By changing the amplitude of the sinusoidal voltage and the DC voltage which are used to drive the semiconductor electro-absorption type optical modulator, the optical modulator is controlled so that the gate width on the time domain is smaller than the time width which is a reciprocal of the transmission rate of the multiplexed optical pulse signal and at least one series of pulse signals is separated from the multiplexed signal. The thus separated optical pulse signal is subjected to waveform equalization and retiming synchronization.

As described above, according to the present invention, the semiconductor electro-absorption type optical modulator, which is not affected by the state of polarization of the input pulse signal light, is used to perform its retiming and waveform shaping at the signal transmission rate and, in the case of a time-multiplexed signal, the transmission rate prior to its multiplexing. Moreover, the gate width on the time domain can be altered by changing the DC voltage, which is applied to the semiconductor electro-absorption type optical modulator, and the sinusoidal voltage synchronized with a bit rate of the input pulse signal or a bit rate of the signal prior to its multiplexing.

Embodiments of the present invention will now be described, by way of example, with reference to the accompaying drawings, in which:
Fig. 1 is a block diagram illustrating an optical waveform shaping device as an optical repeater which employs a semiconductor electro-absorption type optical modulator according to an embodiment of the present invention;
Fig. 2 is a diagram showing operating waveforms in the embodiment of Fig. 1;
Fig. 3 is a block diagram illustrating an optical waveform shaping device which extracts an unmultiplexed optical signal from a time-multiplexed optical signal in accordance with another embodiment of the present invention;
Fig. 4 is a diagram showing operating waveforms in the embodiment of Fig. 3;
Fig. 5 is a block diagram illustrating a modification of the embodiment shown in Fig. 3; and
Fig. 6 is a block diagram illustrating another modification of the embodiment shown in Fig. 3.

### [Embodiment 1]

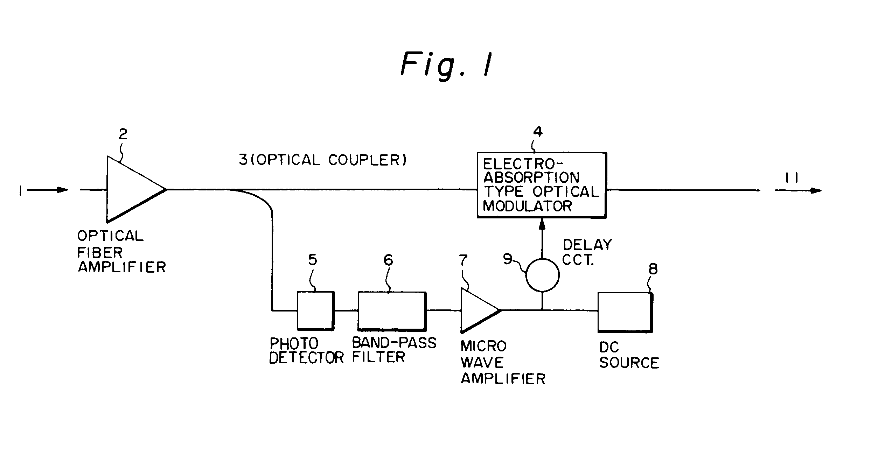

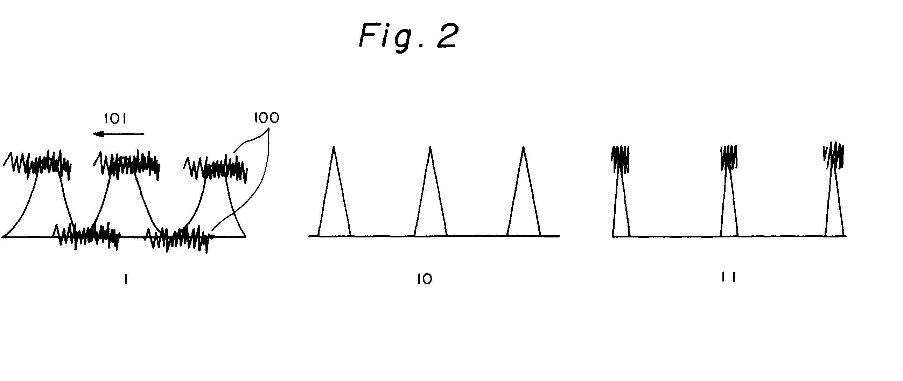

A description will be given first of the operation principle of the invention. In Fig. 1 a transmitted optical signal 1 is one that has been transmitted over a long distance optical fiber of an optical amplifying-repeating system and contains accumulated noise 100, which is the sum total of noise components by a plurality of optical amplifiers of the transmission system, and timing jitters 101 as shown in Fig. 2. In Fig. 1 the transmitted optical signal 1 is amplified by an optical fiber amplifier 2 and is then branched by an optical branch circuit formed by an optical coupler 3 into two, one of which is applied to an InGaAsP electro-absorption type optical modulator 4. The other optical signal is converted by a photodetector 5 into an electric signal, which is applied to a band-pass filter 6 to extract substantially the fundamental frequency component only synchronised with a bit rate of the input optical signal. The filter output is amplified by a microwave amplifier 7 to generate a sinusoidal voltage, on which a reverse bias voltage from a DC voltage source 8 is superimposed. The sinusoidal voltage is then applied to a delay circuit 9, by which it is synchronised with a bit rate of the transmitted optical signal 1 so that the peak position of the former matches with that of the latter. Thereafter, the sinusoidal voltage is applied to the InGaAsP electro-absorption type optical modulator 4 to drive it. Incidentally, the optical fiber amplifier 2 is used to compensate for optical loss which is caused by branching or the like, and it may be omitted when the intensity of the optical signal 1 is sufficiently high.

In this embodiment, the transfer function of the optical modulator 4 in the time domain, that is, the pulse width of the gate waveform 10 shown in Fig. 2, can be set to an arbitrary value by changing the amplitudes of the bias voltage and the sinusoidal voltage which are applied to the optical modulator 4. The gate function with short duration can be also obtained just with the sinusoidal voltage. This is one of the large merits of this embodiment, because this single-frequency operation scheme does not require an ultra broad band electronic circuit, which is conventionally required to make a driving electric pulse of short duration. Sinusoidal voltages with slight distortion can be also used for driving pulses. A performance test of this embodiment was made using an InGaAsP λ/4 shift DFB laser oscillating at a single wavelength of 1.55 µm, as a transmitted optical signal source, and a semiconductor electro-absorption type optical modulator having an InGaAsP modulation waveguide of 1.45-µm forbidden band wavelength. It was ascertained in this test that the pulse width of the afore-mentioned gate waveform 10 could be changed arbitrarily between 150 and 40 picoseconds by changing the bias voltage from -1 V to -4 V by applying a modulation voltage (modulation power 23 dBm) of a 5-GHz sinusoidal wave in a 6.4V to the optical modulator 4. Conversely, by changing the amplitude of the 5-GHz sinusoidal voltage from 6V to 10 V while holding the bias voltage to the optical modulator 4 at -3 V at which an extinction ratio of 20 dB could be obtained, the pulse width of the gate waveform 10 changed from 40 to 80 picoseconds. By changing the bias voltage to the modulator and the amplitude of the modulation voltage, the pulse width of the gate waveform 10 can be set over an arbitrary range from 10 to 90% of a period of the modulation signal wave.

Furthermore, it has been ascertained that when the gate of the optical modulator 4 is in the closed state, almost all spectral noise components of the optical fiber amplifier 2 over a wavelength band from 1.52 to 1.58 µm can be eliminated. More specifically, when a bias voltage of -6 V was applied to the optical modulator 4 so that the optical signal having passed through the optical fiber amplifier 2 would be extinguished by 30 dB, spectral noise components of the optical fiber amplifier 2 over the 1.52 to 1.58 µm wavelength band were also attenuated in the range of 20 to 30 dB. Hence, by adjusting the delay time of the delay circuit so that the input to the optical modulator 4 is synchronized with a bit rate of the optical signal, and by suitably selecting the pulse width of the gate waveform, the optical signal becomes maximum at the maximum point of the gate waveform and excessive broadening of the waveform is eliminated, automatically correcting the timing jitter.

Thus, there is obtained, as the repeater output, a waveform-shaped and timing-synchronized optical output waveform 11 with no accumulated noise as shown in Fig. 2.

To verify this, a performance test was made in which an optical pulse train of a 12-GHz repetition period and a 45-psec pulse width, after having passed through the optical fiber amplifier, was applied to the optical waveform shaping device of this embodiment. In a case where the bias voltage for the optical modulator was -2 V, the amplitude of the sinusoidal voltage was 5.7 V and the DC voltage source, the delay circuit and the amplifier were adjusted so that the delay time would be timing-synchronized with a bit timing of the input pulse, a train of optical output pulses, each waveform-shaped to a 25-psec pulse width and timing-synchronized, was obtained. As a result of observation of their spectrums, it was found that the noise level of the output light dropped by about 3 dB because the accumulated noise, which was the sum total of noise of a plurality of optical amplifiers of the transmission system in a gate-closed state, were eliminated. Therefore, the waveform shaping device of this embodiment can be used as an optical repeater which performs waveform shaping and the timing synchronization and has an accumulated noise eliminating function.

Moreover, in a case where an optical amplifier, which has a gain saturation level near the power level necessary for the transmitted signal, is connected to the output of the optical modulator 4, slight polarization dependence from 0 to about 1 dB of insertion loss of the optical modulator is absorbed by the optical amplifier, providing a constant repeater output.

A feature of the optical waveform shaping device according to this embodiment resides in that the transmission distance of the optical soliton communication system of increased spacing of optical amplifiers can be made remarkably long by using the optical waveform shaping device as a repeater, for example, every 2000 km before the timing jitter presents a serious problem, since it is capable of waveform shaping, retiming and the elimination of noise regardless of polarization of the transmitted signal.

In a linear optical amplifying communication system employing an ordinary return-to-zero code, it is also possible to make the transmission rate extremely high and the transmission distance remarkably long by using the optical waveform shaping device of this embodiment as a repeater before the broadening of a pulse by the wavelength dispersion by the optical fiber poses a serious problem, because it permits waveform shaping, retiming and elimination of noise regardless of polarization of the transmitted signal.

### [Embodiment 2]

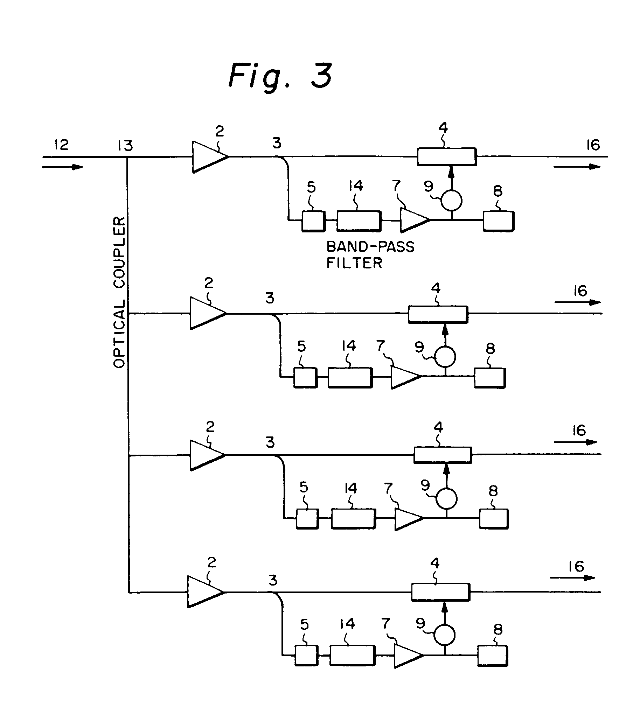

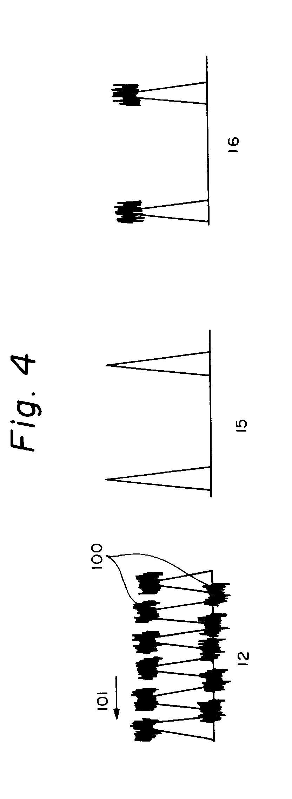

Fig. 3 illustrates another embodiment of the invention and Fig. 4 examples of operating waveforms. Assume that an optical pulse signal 12 transmitted over an optical fiber at a certain rate is formed by multiplexing, on the time domain, a plurality of optical pulse signals modulated at a rate, for instance, 1/4 of the transmission rate. This embodiment of Fig. 3 has a structure wherein the time-multiplexed optical pulse signal 12 is branched by an optical branch circuit formed by an optical coupler 13 into four signals and the optical pulse signal of a bit modulation rate prior to its multiplexing is derived from one of the four branched signals. This embodiment differs from Embodiment 1 in that each band-pass filter 14 in Fig. 3 is a band-pass filter which extracts substantially the fundamental frequency component only of the optical signal synchronised with a rate 1/4 of the transmission rate of the time-multiplexed optical signal and in that the transfer function of the InGaAsP electro-absorption type optical modulator 4 in the time domain, that is, the pulse width of the gate waveform 15, is smaller than the time width which is a reciprocal of the transmission rate of the optical pulse signal 12. The pulse width of the gate waveform 15 does not matter, because it can be changed to an arbitrary value in accordance with the condition of modulation. With the optical waveform shaping device of this embodiment, it is possible to obtain an optical output 16 waveform shaped, timing-synchronised with a low transmission rate and with no accumulated noise.

In this embodiment, the transmission rate of the time-multiplexed optical pulse signal 12 was set to 10 Gb/s. The band-pass filter 14 was one that had a pass band of about 2.5 GHz, and the amplifier was set so that the sinusoidal output voltage would be 7.8 V. The DC bias voltage was set to -2.2 V. A coaxial line type delay circuit was used to synchronise the sinusoidal voltage with one series of optical pulse signals having a transmission rate of 2.5 Gb/s prior to the time multiplexing. As a result, an optical gate waveform synchronized with one series of optical pulse signals prior to the time multiplexing and having a width of 25 picoseconds was obtained, and a desired series of optical pulses prior to the time multiplexing was obtained as the output of this device. The optical pulse signals of the remaining three series could be separated by increasing their delay times of 25, 50 and 75 picoseconds from the above-mentioned delay time.

While this embodiment has been described in connection with the case of separating four multiplexed signals, the operation of separating a maximum of eight multiplexed signals was ascertained experimentally.

This embodiment is not limited specifically to the optical soliton communication but it may also be used as an optical waveform shaping device of an optical amplifying communication system using a return-to-zero code.

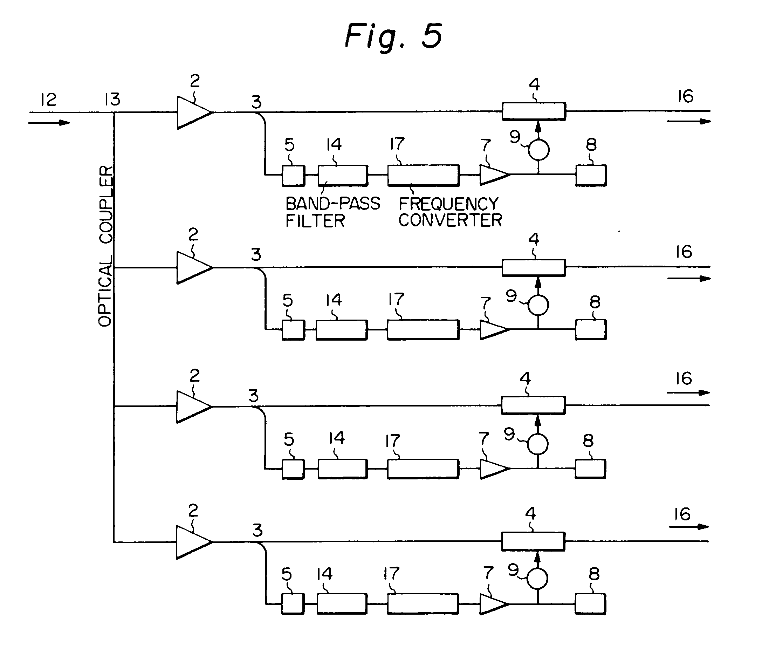

Furthermore, although this embodiment employs the band-pass filter to extract the fundamental frequency component of the transmission rate prior to the multiplexing of signals, it may be-replaced by some other means capable of performing its function, such as a combination of a band-pass filter 14, which extracts substantially the fundamental frequency component of the multiplexed transmission rate, and a frequency converter 17, which converts the frequency component of the signal having passed through the band-pass filter into the fundamental frequency prior to the multiplexing, as shown in Fig. 5.

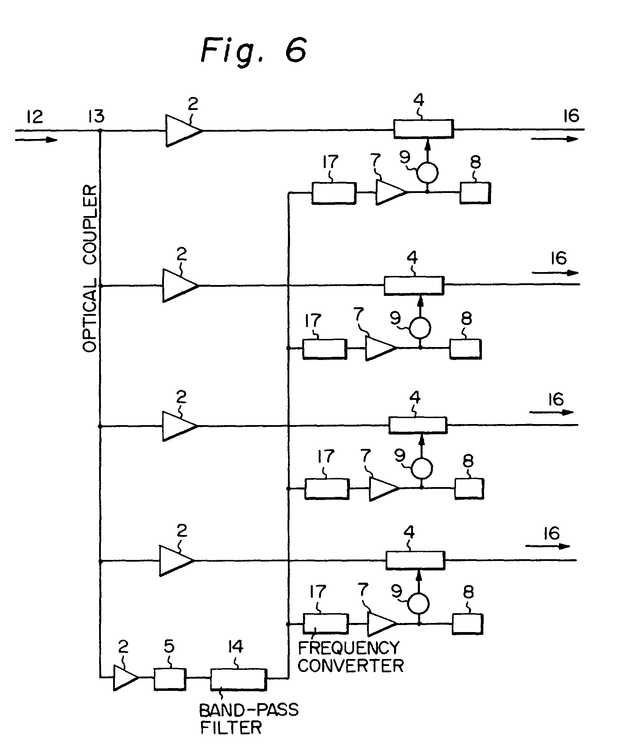

The structure illustrated in Fig. 5 is also modified to circuitry illustrated in Fig. 6 since an output of the band-pass filter 14 can be applied in common to respective inputs to all the frequency converters 17.

A feature of the optical waveform shaping device according to this embodiment lies in that, when used at the receiving end of the time-multiplexed optical communication system, it serves as an optical demultiplexer which separates the multiplexed signals regardless of polarization of the transmitted signal and extracts the modulated signal prior to the multiplexing after waveform shaping, retiming and elimination of noise. According to this embodiment, since signals can be separated in the optical domain without the need of using ultra high-speed electrical circuits at transmitting and receiving ends, it is possible to achieve an ultra high-speed, ultra-large-capacity fiber optic communication.

### [Embodiment 3]

A further embodiment of the invention is an optical waveform shaping device whereby four multiplexed 10 GB/s optical pulse trains are separated in the ratios of 1 to 3 and 2 to 2. In this instance, the device is identical in construction with the embodiment shown in any of Figs. 3, 5 and 6 in that the optical coupler 13 is modified to branch the input optical signal into two. The DC voltages, the sinusoidal modulation voltages and the delay times are set so that the optical gate waveforms of respective electro-absorption type optical modulators satisfy the complementary relationship in one period. More specifically, the conditions for operating the one optical modulator in the case of the 1 to 3 branching ratio are as follows: As for the optical modulator for extracting three series, the delay operation was delayed by 50 picoseconds, the bias voltage was -0.4 V, the modulation voltage was 7.2 V, and a gate waveform of a 75-psec width was formed which would satisfy the complementary relation-ship to the afore-mentioned optical gate waveform of the 25-psec width. As a result, one series of optical pulses prior to the multiplexing were obtained from the one optical modulator and the other three series of optical pulses were obtained from the other optical modulator. Moreover, by setting the bias voltage and the modulation voltage for each of the two optical modulators at -1.8 and 7.5 V, respectively, and by shifting only the delay times by 50 picoseconds, the four multiplexed signals can be separated in the ratio of 2 to 2. Similarly, an optical waveform shaping device was produced for separating 10-Gb/s optical pulse signals in the ratio of n to 8-n (where n = 1, 2, 3, 4). As the DC voltage in a case where an optical gate of a width greater than 80% of the period was formed and the optical signals are separated in the ratio of 1 to 7, a positive voltage of +0.4 V, not the reverse or negative voltage, was used. Accordingly, the DC voltage source in this embodiment is not limited specifically to the reverse voltage of the optical modulator.

The device of this embodiment permits switching of multiplexed optical signals, and hence can also be utilized as an optical switch at a branching point in a fiber optic communication network.

While in the above optical modulator has been described to be an InGaAsP electro-absorption type optical modulator, it is also possible to employ an absorption type optical modulator of a quantum well structure which is designed to reduce its polarization dependence and in which the quantum well layer is formed by an InGaAsP or InGaAs layer and the quantum barrier layer is formed by a layer of InP or InGaAsP which has an energy gap larger than that of the quantum well layer. It is also possible to use an absorption type optical modulator of an InGaAlAs/InAlAs or InGaAs/InAlAs quantum well structure.

The present invention of the above construction produces such merits as mentioned below.

The first optical waveform shaping device permits waveform shaping, retiming and the elimination of accumulated noise of the fiber amplifying system regardless of the state of polarization of the transmitted signal, and hence can be used as a repeater of the optical soliton communication system which suffers variations by polarization. Further, since the operation is conducted, in principle, at a single frequency, the device does not need any high-speed electronic circuits, and hence its operation can easily be speeded up, making it possible to implement an ultrahigh-speed optical communication system of a remarkably long transmission distance. The second optical waveform shaping device, when disposed at the receiving end of a time-multiplex, ultrahigh-speed optical communication system, can be used as an optical demultiplexer which separates the time-multiplex signal in the optical domain regardless of the state of polarization of the transmitted signal. Moreover, it can be used also as an optical switch which divides the transmitted signal into an arbitrary ratio. Since the device performs, in principle, a single-frequency operation at a low frequency and does not call for any specific high-speed electronic circuits, an ultrahigh-speed optical communication system can readily be achieved.

## Claims

1. An optical waveform shaping device, in which, in use, an input optical pulse signal (1) is modulated in a modulator by a modulation signal to perform waveform shaping and re-timing, characterised in that;
an input path for receiving the input optical pulse signal (1) is branched into two paths by an optical branch circuit (3), each of which paths is provided for receiving a respective one of two branched optical signals from the optical branch circuit (3);
a semiconductor electro-absorption type optical modulator (4) is provided as said modulator in one of said two paths, to modulate one of said two branched optical signals by the modulation signal, a DC voltage being applied, in use, to said optical modulator (4) from a DC voltage source (8), and that
the other path of said two paths is provided to obtain said modulation signal from the other of said two branched optical signals; said other path comprising:
a photodetector (5) for receiving the other of said two branched optical signals and for converting that signal into an electric signal;
a band-pass filter (6) for permitting passage therethrough of a substantially sinusoidal voltage synchronised with a bit rate of said input optical pulse signal, which is the fundamental frequency component of the electric signal converted by said photodetector (5);
an amplifier for amplifying the sinusoidal voltage having passed through said band-pass filter (6), and
a delay circuit (9) for receiving and delaying the sinusoidal voltage amplified by said amplifier and the DC voltage from said DC voltage source, and for applying them to said semiconductor electro-absorption type optical modulator (4).

2. An optical waveform shaping device, in which, in use, a plurality of input optical pulse signals obtained from an input time-multiplexed optical pulse signal (12) are respectively modulated in a plurality of modulators by respective modulation signals, to perform waveform shaping and re-timing synchronisation of respective ones of said plurality of input optical pulse signals, characterised in that:
a first optical branch circuit (13) is provided for branching said input time-multiplexed optical pulse signal (12) into said plurality of input optical pulse signals;
each of a plurality of input paths provided for receiving respective ones of said plurality of input optical pulse signals is branched by a respective one of a plurality of second optical branch circuits (3) into a respective pair of a plurality pairs of paths, each of which is provided to receive two branched optical signals from the respective one of said plurality of second optical branch circuits (3);
each of a plurality of semiconductor electro-absorption type optical modulators (4) is provided, as a respective one of said modulators, in a respective pair of paths to modulate one of said two branched optical signals by a respective one of said modulation signals, a DC voltage being applied, in use, to the respective semiconductor electro-absorption type optical modulator (4), from a respective one of a plurality of DC voltage sources (8) ;
that the other path of each pair is provided to obtain a respective modulation signal from the other of said two branched optical signals in said pair of paths; said other path comprising:
a plurality of photodetectors (5), each for receiving the other of said two branched optical signals and for converting said other branched optical signal into an electric signal;
a plurality of means (14; 14,17), each for deriving from said respective one of said plurality of electric signals, a substantially sinusoidal voltage synchronised with a bit rate of an unmultiplexed input optical pulse signal, which is the fundamental frequency component of each of said input optical pulse signals;
a plurality of amplifiers, each for amplifying said sinusoidal voltage having passed through a respective one of said plurality of means (14) and
a plurality of delay circuits (9) each for receiving and delaying said sinusoidal voltage amplified by a respective one of said amplifiers and a respective DC voltage from the respective DC voltage source and for applying said amplified sinusoidal voltage to a respective one of said semiconductor electro-absorption type optical modulators (4).

3. An optical waveform shaping device according to claim 2, characterised in that each of said plurality of means for deriving a substantially sinusoidal voltage synchronised with a bit rate of an unmultiplexed input optical pulse signal comprises a band-pass filter (14) for permitting the passage therethrough of the substantially sinusoidal voltage synchronised with a bit rate of said unmultiplexed optical pulse signal, which is the fundamental frequency component of said unmultiplexed optical pulse signal.

4. An optical waveform shaping device according to claim 2, characterised in that each of said plurality of means for deriving a substantially sinusoidal voltage synchronised with a bit rate of an unmultiplexed input optical pulse signal comprises a band-pass filter (14) for extracting the substantially fundamental frequency component of the transmission rate after multiplexing and of a frequency converter (17), which converts the frequency component of the signal having passed through said band-pass filter (14) into the fundamental frequency component of said unmultiplexed optical pulse signal.

## Patentansprüche

1. Vorrichtung zum Formen optischer Wellenformen, in der bei Anwendung ein optisches Inputimpulssignal (1) in einem Modulator durch ein Modulationssignal so moduliert wird, daß eine Wellenformung und eine erneute Zeiteinteilung vorgenommen wird,
dadurch gekennzeichnet, daß
ein Inputweg zum Empfangen des optischen Inputimpulssignals (1) durch einen optischen Verzweigungsschaltkreis (3) in zwei Wege verzweigt wird, wobei jeder der Wege zum Empfangen eines zugehörigen der beiden verzweigten optischen Signale aus dem optischen Verzweigungsschaltkreis (3) vorgesehen ist,
ein optischer Modulator (4) vom Halbleiterelektroabsorptionstyp als Modulator in einem der beiden Wege vorgesehen ist, um eines der beiden verzweigten optischen Signale durch das Modulationssignal zu modulieren, wobei, bei Anwendung, eine Gleichspannung auf den optischen Modulator (4) aus einer Gleichspannungsquelle (8) aufgebracht wird, und daß
der andere Weg der beiden Wege dazu vorgesehen ist, daß er das Modulationssignal von dem anderen der beiden verzweigten optischen Signale erhält, wobei der andere Weg umfaßt:
einen Photodetektor (5) zum Empfangen des anderen der beiden verzweigten optischen Signale und zum Konvertieren dieses Signals in ein elektrisches Signal,
einen Bandpassfilter (6), um Durchtritt einer im wesentlichen sinusförmigen Spannung hierdurch zu ermöglichen, die mit einer Bitrate des optischen Inputimpulssignals synchronisiert ist, die die fundamentale Frequenzkomponente des durch den Photodetektor (5) konvertierten elektrischen Signals ist,
einen Verstärker zum Verstärken der sinusförmigen Spannung, die den Bandpassfilter (6) passiert hat, und einen Verzögerungsschaltkreis (9) zum Empfangen und Verzögern der sinusförmigen Spannung, die von dem Verstärker verstärkt wurde, und der Gleichspannung von der Gleichspannungsquelle, und um sie auf den optischen Modulator (4) vom Halbleiterelektroabsorptionstyp aufzubringen.

2. Vorrichtung zum Formen optischer Wellenformen, in der bei Anwendung eine Vielzahl von von einem optischen Inputzeitmultipleximpulssignal (12) erhaltene optische Inputimpulssignale jeweils in einer Vielzahl von Modulatoren durch entsprechende Modulationssignale moduliert werden, um eine Wellenformformung und Zeitsynchronisation der zugehörigen der Vielzahl von optischen Inputimpulssignalen durchzuführen, dadurch gekennzeichnet, daß:
ein erster optischer Verzweigungsschaltkreis (13) zum Verzweigen des optischen Inputzeitmultipleximpulssignals (12) in die Vielzahl von optischen Inputimpulssignalen vorgesehen ist,
jeder einer Vielzahl von Inputwegen, die zum Empfangen einzelner der Vielzahl von optischen Inputimpulssignalen vorgesehen sind, durch einen zugehörigen einer Vielzahl von zweiten optischen Verzweigungsschaltkreisen (3) in ein entsprechendes Paar einer Vielzahl von Wegepaaren verzweigt wird, deren jedes vorgesehen ist, um zwei verzweigte optische Signale von dem zugehörigen der Vielzahl von zweiten optischen Verzweigungsschaltkreisen (3) zu empfangen,
jeder einer Vielzahl von optischen Modulatoren (4) vom Halbleiterelektroabsorptionstyp ist, wie ein zugehöriger der Modulatoren, in einem entsprechenden Wegepaar vorgesehen, um eines der beiden verzweigten optischen Signale durch ein zugehöriges der Modulationssignale zu modulieren, wobei, bei Anwendung, aus einer zugehörigen einer Vielzahl von Gleichspannungsquellen (8) eine Gleichspannung auf den zugehörigen optischen Modulator (4) vom Halbleiterelektroabsorptionstyp aufgebracht wird,
daß der andere Weg jedes Paars vorgesehen ist, um ein entsprechendes Modulationssignal vom anderen der beiden verzweigten optischen Signale in dem Wegepaar zu erhalten, wobei der andere Weg umfaßt:
eine Vielzahl von Photodetektoren (5), jeder zum Empfangen des anderen der beiden verzweigten optischen Signale und zum Konvertieren des anderen verzweigten optischen Signals in ein elektrisches Signal,
eine Vielzahl von Mitteln (14; 14,17), jedes zum Ableiten einer im wesentlichen sinusförmigen Spannung aus dem zugehörigen der Vielzahl von elektrischen Signalen, die mit einer Bitrate eines nicht multiplexen optischen Inputimpulssignals synchronisiert ist, die die fundamentale Frequenzkomponente jedes der optischen Inputimpulssignale ist,
eine Vielzahl von Verstärkern, jeder zum Verstärken der sinusförmigen Spannung, die ein zugehöriges der Vielzahl von Mitteln (14) passiert hat und
eine Vielzahl von Verzögerungsschaltkreisen (9) jeder zum Empfangen und Verzögern der sinusförmigen Spannung, die durch einen zugehörigen der Verstärker verstärkt ist, und einer zugehörigen Gleichspannung von der zugehörigen Gleichspannungsquelle und zum Aufbringen der verstärkten sinusförmigen Spannung auf einen zugehörigen optischen Modulator (4) vom Halbleiterelektroabsorptionstyp.

3. Vorrichtung zum Formen optischer Wellenformen nach Anspruch 2, dadurch gekennzeichnet, daß jedes der Vielzahl von Mitteln zum Ableiten einer im wesentlichen sinusförmigen Spannung, die mit einer Bitrate eines nicht multiplexen optischen Inputimpulssignals synchronisiert ist, einen Bandpassfilter (14) umfaßt, um Durchtritt einer im wesentlichen sinusförmigen Spannung hierdurch zu ermöglichen, die mit einer Bitrate des nicht multiplexen optischen Impulssignals synchronisiert ist, die die fundamentale Frequenzkomponente des nicht multiplexen optischen Impulssignals ist.

4. Vorrichtung zum Formen optischer Wellenformen nach Anspruch 2, dadurch gekennzeichnet, daß jedes der Vielzahl von Mitteln zum Ableiten einer im wesentlichen sinusförmigen Spannung, die mit einer Bitrate eines nicht multiplexen optischen Inputimpulssignals synchronisiert ist, einen Bandpassfilter (14) umfaßt zum Extrahieren der im wesentlichen fundamentalen Frequenzkomponente der Übertragungsrate nach Multiplexen und eines Frequenzkonverters (17), der die Frequenzkomponente des Signals nach dem Passieren des Bandpassfilters (14) in die fundamentale Frequenzkomponente des nicht multiplexen optischen Impulssignals konvertiert.

## Revendications

1. Dispositif de mise en forme d'ondes optiques dans lequel, pendant l'utilisation, un signal d'impulsions optiques d'entrée (1) est modulé dans un modulateur par un signal de modulation pour effectuer une mise en forme d'ondes et une resynchronisation, caractérisé en ce que ;
un chemin d'entrée destiné à recevoir le signal d'impulsions optiques d'entrée (1) est séparé en deux chemins par un circuit de séparation optique (3), chacun desquels chemins étant prévu pour recevoir un signal respectif des deux signaux optiques séparés provenant du circuit de séparation optique (3) ;
un modulateur optique du type à électro-absorption à semi-conducteur (4) est prévu comme dit modulateur dans l'un desdits deux chemins, pour moduler l'un desdits deux signaux optiques séparés par le signal de modulation, une tension en courant continu étant appliquée, pendant l'utilisation, audit modulateur optique (4) depuis une source de tension en CC (8), et en ce que
l'autre chemin desdits deux chemins est prévu pour obtenir ledit signal de modulation à partir de l'autre desdits deux signaux optiques séparés ; ledit autre chemin comprenant :
un photodétecteur (5) destiné à recevoir l'autre desdits deux signaux optiques séparés et destiné à convertir ce signal en un signal électrique ;
un filtre passe bande (6) destiné à permettre à travers celui-ci le passage d'une tension sensiblement sinusoïdale synchronisée avec le débit binaire dudit signal d'impulsions optiques d'entrée, qui est la composante de fréquence fondamentale du signal électrique converti par ledit photodétecteur (5) ;
un amplificateur destiné à amplifier le signal sinusoïdal transmis à travers ledit filtre passe bande (6), et
un circuit de retard (9) destiné à recevoir et à retarder la tension sinusoïdale amplifiée par ledit amplificateur et la tension en CC provenant de ladite source de tension en CC et à les appliquer au dit modulateur optique du type à électro-absorption à semi-conducteur (4).

2. Dispositif de mise en forme d'ondes optiques dans lequel, pendant l'utilisation, une pluralité de signaux d'impulsions optiques d'entrée obtenus à partir d'un signal d'impulsions optiques d'entrée multiplexées dans le temps (12) sont respectivement modulés dans une pluralité de modulateurs par des signaux de modulation respectifs pour effectuer une mise en forme d'ondes et une resynchronisation de signaux respectifs de ladite pluralité de signaux d'impulsions optiques d'entrée, caractérisé en ce que ;
un premier circuit de séparation optique (13) est prévu pour séparer ledit signal d'impulsions optiques d'entrée multiplexées dans le temps (12) en ladite pluralité de signaux d'impulsions optiques d'entrée ;
chaque chemin d'une pluralité de chemins d'entrée prévus pour recevoir des signaux respectifs de ladite pluralité de signaux d'impulsions optiques d'entrée est séparé par un circuit respectif d'une pluralité de deuxièmes circuits de séparation optiques (3) en une paire respective d'une pluralité de paires de chemins, chacune d'entre elles étant prévue pour recevoir deux signaux optiques séparés depuis les circuits respectifs de ladite pluralité de deuxièmes circuits de séparation optiques (3) ;
chaque modulateur d'une pluralité de modulateurs optiques du type à électro-absorption à semi-conducteur (4) est prévu, comme modulateur respectif desdits modulateurs, dans une paire respective de chemins pour moduler l'un desdits deux signaux optiques séparés par un signal respectif desdits signaux de modulation, une tension en CC étant appliquée, pendant l'utilisation, au modulateur optique respectif du type à électro-absorption à semi-conducteur (4), depuis une source respective d'une pluralité de sources de tension en CC (8) ;
en ce que l'autre chemin de chaque paire est prévu pour obtenir un signal de modulation respectif à partir de l'autre desdits deux signaux optiques séparés dans ladite paire de chemins ; ledit autre chemin comprenant :
une pluralité de photodétecteurs (5), destinés chacun à recevoir l'autre desdits deux signaux optiques séparés et destinés à convertir ledit autre signal optique séparé en un signal électrique ;
une pluralité de moyens (14 ; 14, 17), destinés chacun à déterminer à partir dudit signal respectif de ladite pluralité de signaux électriques, une tension sensiblement sinusoïdale synchronisée avec un débit binaire d'un signal d'impulsions optiques d'entrée non-multiplexées, qui est la composante de fréquence fondamentale de chacun desdits signaux d'impulsions optiques d'entrée ;
une pluralité d'amplificateurs, destinés chacun à amplifier ladite tension sinusoïdale transmise à travers des moyens respectifs de ladite pluralité de moyens (14) et
une pluralité de circuits de retard (9), destinés chacun à recevoir et à retarder ladite tension sinusoïdale amplifiée par un amplificateur respectif desdits amplificateurs et une tension en CC respective provenant de la source de tension en CC respective et destinés à appliquer ladite tension sinusoïdale amplifiée à un modulateur respectif desdits modulateurs optiques du type à électro-absorption à semi-conducteur (4).

3. Dispositif de mise en forme d'ondes optiques selon la revendication 2, caractérisé en ce que chaque moyen de ladite pluralité de moyens pour déterminer une tension sensiblement sinusoïdale synchronisée avec un débit binaire d'un signal d'impulsions optiques d'entrée non-multiplexées comprend un filtre passe bande (14) destiné à permettre le passage à travers celui-ci de la tension sensiblement sinusoïdale synchronisée avec un débit binaire dudit signal d'impulsions optiques non-multiplexées, qui est la composante de fréquence fondamentale dudit signal d'impulsions optiques non-multiplexées.

4. Dispositif de mise en forme d'ondes optiques selon la revendication 2, caractérisé en ce que, chaque moyen de ladite pluralité de moyens pour déterminer une tension sensiblement sinusoïdale synchronisée avec le débit binaire d'un signal d'impulsions optiques d'entrée non-multiplexées comprend un filtre passe bande (14) destiné à extraire la composante de fréquence sensiblement fondamentale de la vitesse de transmission après multiplexage et d'un convertisseur de fréquence (17), qui convertit la composante de fréquence du signal transmis à travers ledit filtre passe bande (14) en la composante de fréquence fondamentale dudit signal d'impulsions optiques non-multiplexées.
